# EUROPEAN PATENT APPLICATION

(11) **EP 4 064 528 A2**
(43) Date of publication of application: **28.09.2022**
(21) Application number: 22163149.2
(22) Date of filing: 21.03.2022
(51) Int. Cl.: H02K 3/34, H02K 15/085

(54) **ARMATURE AND METHOD FOR MANUFACTURING ARMATURE**

(30) Priority: 26.03.2021 JP 2021053914
(71) Applicant: TOYOTA BOSHOKU KABUSHIKI KAISHA, Kariya-shi, Aichi 448-8651 (JP)
(72) Inventor: ARAI, Yasunari, Kariya-shi, 448-8651 (JP)
(74) Representative: TBK

(57) **Abstract**

An armature includes an iron core (20). The iron core (20) includes stacked iron core pieces (30) and includes slots (23). The iron core pieces (30) are each plate-shaped. The armature includes a coil (40) arranged in each of the slots (23) and an insulating sheet (50) arranged between an inner surface of each of the slots (23) and an outer surface of the coil (40). The insulating sheet (50) includes a body (51) that covers the inner surface of the slot (23). The insulating sheet (50) includes protrusions (52) that protrude from the body (51) toward an opposite side of the coil (40) and are spaced apart from each other in a stacking direction of the iron core (20). The protrusions (52) clamp and hold one or more of the iron core pieces (30) in the stacking direction.

## Description

### BACKGROUND

### 1. Field

The present disclosure relates to an armature and to a method for manufacturing an armature.

### 2. Description of Related Art

Conventional armatures (e.g., stators) of rotating electric machines include an iron core having slots and include a coil arranged in each slot and formed by a conductor (refer to, for example, PCT Publication No. WO2014041637). Each slot includes an insulating sheet that insulates the iron core and the coil.

Such an iron core is formed by stacking iron core pieces that are punched out of an electrical steel sheet. Each iron core piece includes recesses and projections in the thickness direction of the iron core piece. Two adjacent iron core pieces in the stacking direction of the iron core are joined to each other by swaging the iron core pieces at their recesses and respective projections. This maintains the shape of the iron core.

In a case of joining iron core pieces to each other by swaging the iron core pieces at their recesses and respective projections, when the recesses and projections cause the iron core pieces to be electrically connected to each other, short-circuiting potentially occurs. This causes eddy currents to easily occur in the iron core and potentially increases iron loss in the iron core. However, if the swaging at the recesses and respective projections is not performed, the iron core pieces are not joined to each other. Thus, the shape of the iron core is potentially unable to be maintained. Thus, in an armature, it is desired that the iron loss in the iron core be limited and the shape of the iron core be maintained.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An armature that solves the above-described problem includes an iron core. The iron core includes stacked iron core pieces and includes slots. The iron core pieces are each plate-shaped. The armature includes a coil arranged in each of the slots and an insulating sheet arranged between an inner surface of each of the slots and an outer surface of the coil. The insulating sheet includes a body that covers the inner surface of each of the slots. The insulating sheet includes protrusions that protrude from the body toward an opposite side of the coil and are spaced apart from each other in a stacking direction of the iron core. The protrusions clamp and hold one or more of the iron core pieces in the stacking direction.

A method for manufacturing an armature that solves the above-described problem includes is provided. The armature includes an iron core that includes stacked iron core pieces and includes slots. The iron core pieces are each plate-shaped. The armature includes a coil arranged in each of the slots and an insulating sheet arranged between an inner surface of each of the slots and an outer surface of the coil. The method includes an insulating sheet arranging step that arranges the insulating sheet in each of the slots, a coil arranging step that arranges the coil in the slot where the insulating sheet is arranged, and a pressing step that presses the coil arranged in the slot toward the inner surface of the slot to plastically deform the coil along the inner surface of the slot and form protrusions. The protrusions protrude from the insulating sheet toward an opposite side of the coil. The protrusions clamp and hold one or more of the iron core pieces in a stacking direction of the iron core.

Other features and aspects will be apparent from the following detailed description, the drawings, and the claims.

### BRIEF DESCRIPTION OF THE DRAWINGS

Fig. 1 is a cross-sectional view showing a stator according to an embodiment.
Fig. 2 is an enlarged cross-sectional view showing the stator.
Fig. 3 is a cross-sectional view taken along line 3-3 in Fig. 2.
Fig. 4 is a cross-sectional view taken along line 4-4 in Fig. 2.
Fig. 5 is a cross-sectional view showing a state in which the insulating sheet is arranged in the slot in an insulating sheet arranging step.
Fig. 6 is a cross-sectional view showing a state in which the coil is arranged in the slot in a coil arranging step.
Fig. 7 is a cross-sectional view showing a state in which multiple arrangement portions are pressed in a pressing step.
Fig. 8 is a cross-sectional view showing a state in which all the arrangement portions are pressed in the pressing step.
Fig. 9 is a cross-sectional view showing a stator according to a modification.
Fig. 10 is a cross-sectional view showing a stator according to another modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

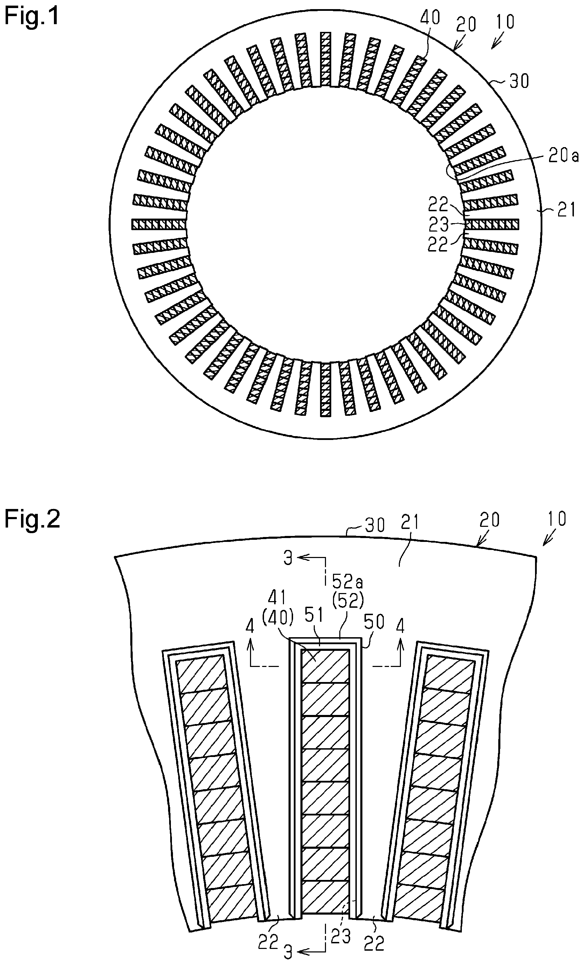

An embodiment in which an armature and a method for manufacturing an armature are used for a stator 10 and a method for manufacturing the stator 10 will now be described with reference to Figs. 1 to 8.

For illustrative purposes, some parts of the structures in the drawings may be exaggerated or simplified. Further, the dimensional ratios of portions may be different among the drawings.

### Stator 10

As shown in Figs. 1 and 2, the stator 10 of a rotating electric machine includes a cylindrical stator core 20, a coil 40, and insulating sheets 50. The stator core 20 includes a central hole 20a. The coil 40 is wound around the stator core 20. Each insulating sheet 50 covers the outer surface of the coil 40. The insulating sheets 50 are not shown in Fig. 1.

The stator 10 of the present embodiment is used for a rotating electric machine of a three-phase synchronous type and is arranged to surround a rotor (not shown). The stator core 20 corresponds to an iron core.

### Stator Core 20

The stator core 20 includes an annular yoke 21 and teeth 22. The teeth 22 extend from the yoke 21 toward the inner side of the yoke 21 in the radial direction. The teeth 22 are spaced apart from each other in the circumferential direction of the yoke 21.

A slot 23 is arranged between adjacent ones of the teeth 22 in the circumferential direction of the yoke 21. The slots 23 open inward in the radial direction and extend in the radial direction. The stator core 20 of the present embodiment includes forty-eight slots 23 in total.

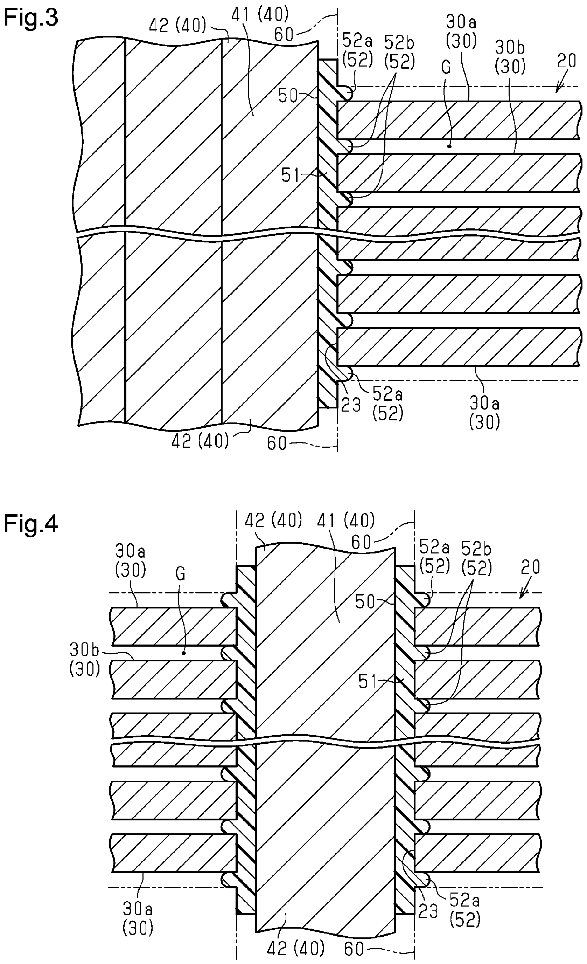

As shown in Fig. 3, the stator core 20 is formed by stacking plate-shaped iron core pieces 30. Each iron core piece 30 is formed by punching out of an electrical steel sheet.

The stacking direction of the stator core 20 is hereinafter simply referred to as the stacking direction. The circumferential direction of the stator core 20 around the axis of the stator core 20 is simply referred to as the circumferential direction. The radial direction of the stator core 20 around the axis is simply referred to as the radial direction. The iron core pieces 30 at the opposite ends of stator core 20 in the stacking direction may be referred to as the iron core pieces 30a. The iron core pieces 30 between the iron core pieces 30a may be referred to as the iron core pieces 30b.

### Coil 40

As shown in Fig. 2, the coil 40 is arranged in each slot 23, for example, in the radial direction in eight rows. In the present embodiment, the coil 40 of U-, V-, and W-phases is wound across the teeth 22 through distributed winding.

The coil 40 includes a rectangular wire made of metal (e.g., aluminum alloy) and an insulating film that covers the outer surface of the rectangular wire. The insulating film is not shown in the drawings.

As shown in Fig. 3, the coil 40 includes an arrangement portion 41 and coil ends 42. The arrangement portions 41 are arranged in each slot 23. The coil ends 42 are continuous with each arrangement portion 41 and protrude from the slot 23 on the opposite sides of the coil 40 in the stacking direction.

The arrangement portions 41 extend straight in the stacking direction. Although not shown in the drawings, the arrangement portions 41 arranged in two different slots 23 are coupled to each other by the coil ends 42.

As shown in Fig. 2, each slot 23 includes eight arrangement portions 41 adjacent to each other in the radial direction.

The cross-sectional shape of the coil 40 of the present embodiment orthogonal to the longitudinal direction of the coil 40 has a rectangular shape including long sides and short sides. Long sides of each arrangement portion 41 in the cross-sectional shape extend in the width direction of the slot 23. Short side of each arrangement portion 41 in the cross-sectional shape extend in the radial direction. The width direction of the slot 23 is orthogonal to the stacking direction and the radial direction.

### Insulating Sheet 50

The insulating sheet 50 is located between the inner surface of each slot 23 and the outer surface of the coil 40. The insulating sheet 50 is covered to surround the entire inner surface of the slot 23. The insulating sheet 50 opens inward in the radial direction in the same manner as the slot 23.

Each insulating sheet 50 includes a plastic base (not shown) and insulating layers (not shown) disposed on opposite surfaces of the base. The insulating layer is formed by, for example, impregnating a nonwoven fabric with a plastic material.

As shown in Figs. 3 and 4, the insulating sheet 50 includes a body 51 and protrusions 52. The body 51 covers the outer surface of the coil 40. The protrusions 52 protrude from the body 51 toward the opposite side of the coil 40 and are spaced apart from each other in the stacking direction.

The body 51 extends in the stacking direction along the arrangement portion 41. The opposite ends of the body 51 in the stacking direction protrude from the slot 23.

The protrusions 52 are formed by part of the insulating layer protruding toward the opposite side of the coil 40. The protrusions 52 include two outer protrusions 52a and multiple inner protrusions 52b. The inner protrusions 52b are located between the two outer protrusions 52a in the stacking direction.

The two outer protrusions 52a clamp and hold the entirety of the stator core 20 from the opposite sides of the stator core 20 in the stacking direction. The outer protrusions 52a protrude from portions of the body 51 that are located outside the slot 23. Each outer protrusion 52a is in contact with the outer surface of the corresponding iron core piece 30a.

Each inner protrusion 52b is located between adjacent ones of the iron core pieces 30 in the stacking direction. The inner protrusions 52b and the iron core pieces 30b are alternately arranged in the stacking direction. Thus, two adjacent ones of the inner protrusions 52b in the stacking direction clamp and hold one iron core piece 30b. Each iron core piece 30a is clamped between the corresponding outer protrusion 52a and the corresponding inner protrusion 52b.

A gap G is provided between two iron core pieces 30 that hold each inner protrusion 52b and are located on the opposite sides of the inner protrusion 52b in the stacking direction. The gap G is provided over the entire section between the two iron core pieces 30. Thus, the iron core pieces 30 are spaced apart from each other in the stacking direction.

The outer protrusions 52a and the inner protrusions 52b extend over substantially the entire circumference of each slot 23. That is, the outer protrusions 52a and the inner protrusions 52b are formed such that portions protruding outward from the body 51 in the radial direction are continuous with portions protruding from the body 51 toward the opposite sides of the slot 23 in the width direction. In plan view, the outer protrusions 52a and the inner protrusions 52b are substantially U-shaped.

### Method for Manufacturing Stator

The method for manufacturing the stator 10 will now be described.

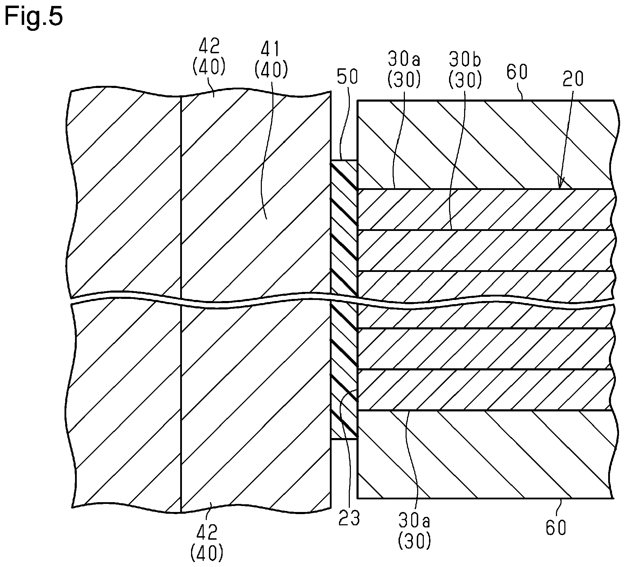

First, as shown in Fig. 5, the insulating sheet 50 is arranged in each slot 23 of the stator core 20 (insulating sheet arranging step). The insulating sheet 50 may be inserted into the slot 23 from the inner side in the radial direction or may be inserted into the slot 23 in the stacking direction. Adjacent ones of the iron core pieces 30 in the stacking direction are in contact with each other in the stacking direction.

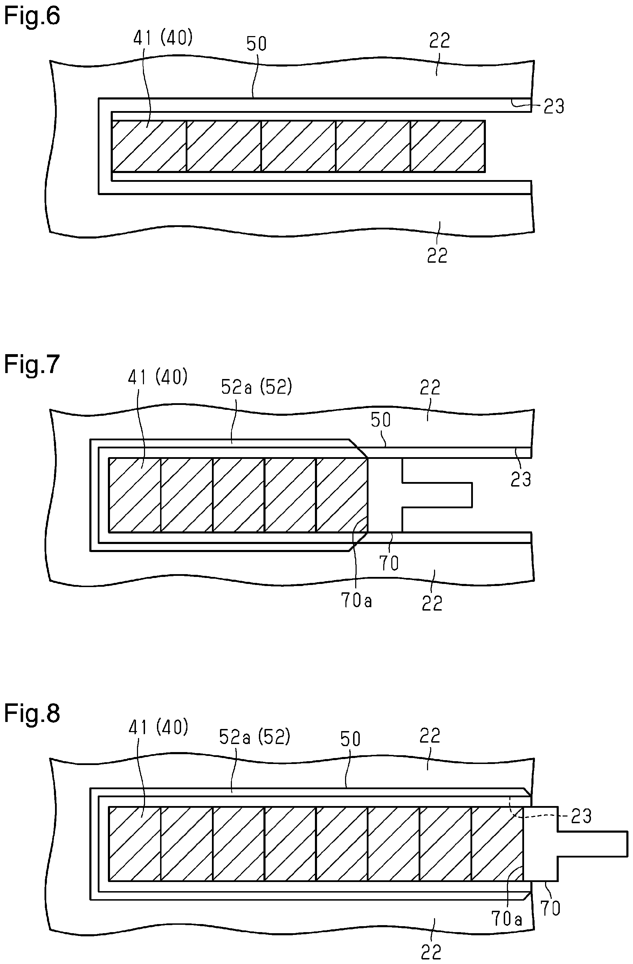

Holding jigs 60 are arranged on the opposite sides of the stator core 20 in the stacking direction, respectively. Each holding jig 60 is in contact with a portion of the corresponding iron core piece 30a defining the yoke 21 and the teeth 22. The holding jigs 60 are not shown in Figs. 6 to 8.

Next, as shown in Fig. 6, the arrangement portion 41 of the coil 40 is arranged in the slot 23 where the insulating sheet 50 is arranged (coil arranging step). The arrangement portions 41 are arranged in the slot 23 such that the radial direction coincides with the extending direction of the long sides of the arrangement portions 41. In the coil arranging step of the present embodiment, the arrangement portions 41 are first arranged in the slot 23 in five rows in the radial direction.

Subsequently, as shown in Fig. 7, a pressing jig 70 is inserted into the slot 23 to press the arrangement portions 41. The pressing jig 70 includes a pressing surface 70a extending over the slot 23 in the stacking direction.

Then, the arrangement portions 41 arranged in the slot 23 are pressed by the pressing jig 70 toward the inner surface of the slot 23; more specifically, toward the outer side in the radial direction. This plastically deforms the arrangement portions 41 along the inner surface of the slot 23. The arrangement portions 41 are plastically deformed such that their thicknesses in the radial direction decrease and their thicknesses in the width direction increase. This causes each arrangement portion 41 to have long sides extending in the width direction of the slot 23 and short sides extending in the radial direction of the slot 23.

During the plastic deformation of the arrangement portions 41, the insulating sheet 50 is pressed toward the inner surface of the slot 23 by the arrangement portions 41. The insulating sheet 50 is pressed toward the outer side in the radial direction and the opposite sides in the width direction. This forms the protrusions 52, which protrude from the body 51 of the insulating sheet 50 toward the opposite side of the coil 40, as shown in Figs. 3 and 4 (pressing step). In this step, the body 51 extends in the stacking direction.

In the pressing step, as shown by the broken lines in Figs. 3 and 4, the outer protrusions 52a are formed by part of the insulating sheet 50 entering the sections between the holding jigs 60 and the iron core pieces 30a. The holding jigs 60 and the iron core pieces 30a are moved away from each other in the stacking direction.

Further, the inner protrusions 52b are formed by part of the insulating sheet 50 entering the section between two adjacent ones of the iron core pieces 30 in the stacking direction. The two iron core pieces 30 are moved away from each other in the stacking direction.

Likewise, as shown in Fig. 8, three additional arrangement portions 41 are pressed by the pressing jig 70 so as to be plastically deformed, and the outer protrusions 52a and the inner protrusions 52b are formed over substantially the entire circumference of the slot 23. In the present embodiment, two of the three arrangement portions 41 are first arranged in the slot 23 and pressed by the pressing jig 70. Then, the remaining one arrangement portion 41 is arranged in the slot 23 and pressed by the pressing jig 70.

The stator 10 is thus produced.

The operation of the present embodiment will now be described.

The two outer protrusions 52a clamp and hold the entire stator core 20 from the opposite sides of the stator core 20 in the stacking direction. Thus, the iron core pieces 30 are positioned in the stacking direction. This reduces the area of the entire stator core 20 where the iron core piece 30 are swaged to each other (operation 1).

Further, the inner protrusions 52b are each located between adjacent ones of the iron core pieces 30 in the stacking direction to clamp and hold the iron core pieces 30b in the stacking direction. This reduces the area where each iron core piece 30b held between two inner protrusions 52b is swaged to the adjacent iron core piece 30b (operation 2).

The advantages of the embodiment will now be described.
(1) The stator 10 includes the stator core 20 with the slots 23, the coil 40 arranged in each slot 23, and the insulating sheet 50 arranged between the inner surface of each slot 23 and the outer surface of the coil 40. The stator core 20 includes the stacked iron core pieces 30. Each iron core piece 30 has a plate shape. The insulating sheet 50 includes the body 51 and the protrusions 52. The body 51 covers the inner surface of the slot 23. The protrusions 52 protrude from the body 51 toward the opposite side of the coil 40 and are spaced apart from each other in the stacking direction of the stator core 20. The protrusions 52 include two outer protrusions 52a and multiple inner protrusions 52b. The two outer protrusions 52a clamp and hold the entire stator core 20 from the opposite sides of the stator core 20 in the stacking direction. The inner protrusions 52b are each located between adjacent ones of the iron core pieces 30 in the stacking direction to clamp and hold the iron core pieces 30.
   Such a structure produces the above-described operation 1 and operation 2, and thus limits iron loss of the stator core 20 and maintains the shape of the stator core 20.
(2) The gap G is provided between two iron core pieces 30 that hold each inner protrusion 52b and are located on the opposite sides of the inner protrusion 52b in the stacking direction.
   Such a structure allows a cooling medium (e.g., oil) to flow into the gap G between the iron core pieces 30. Thus, the stator core 20 is cooled.
(3) In the insulating sheet arranging step, the insulating sheet 50 is arranged in each slot 23. In the coil arranging step, the coil 40 is arranged in the slot 23 where the insulating sheet 50 is arranged. In the pressing step, the coil 40 arranged in the slot 23 is pressed toward the inner surface of the slot 23 to plastically deform the coil 40 along the inner surface of the slot 23 and form the protrusions 52. The protrusions 52 protrude from the insulating sheet 50 toward the opposite side of the coil 40 and clamp and hold the iron core pieces 30 in the stacking direction.

In such a method, in the insulating sheet arranging step, the insulating sheet 50 is arranged in the slot 23. Next, in the coil arranging step, the coil 40 is arranged in the slot 23 where the insulating sheet 50 is arranged. Then, in the pressing step, the coil 40 arranged in the slot 23 is pressed toward the inner surface of the slot 23. This plastically deforms the coil 40 along the inner surface of the slot 23. Further, the protrusions 52 protrude from the insulating sheet 50 toward the opposite side of the coil 40 and clamp and hold the iron core pieces 30 in the stacking direction.

In the stator 10 manufactured in such a manner, the iron core pieces 30 are clamped and held by the protrusions 52 of the insulating sheet 50 so that the iron core pieces 30 are positioned in the stacking direction. This reduces the area where each iron core piece 30 held between the protrusions 52 is swaged to the adjacent iron core piece 30, thereby limiting the iron loss of the stator core 20 and maintaining the shape of the stator core 20.

### Modifications

The present embodiment may be modified as follows. The present embodiment and the following modifications can be combined as long as they remain technically consistent with each other.

In the pressing step, the arrangement portions 41 may be pressed one by one or may be collectively pressed.

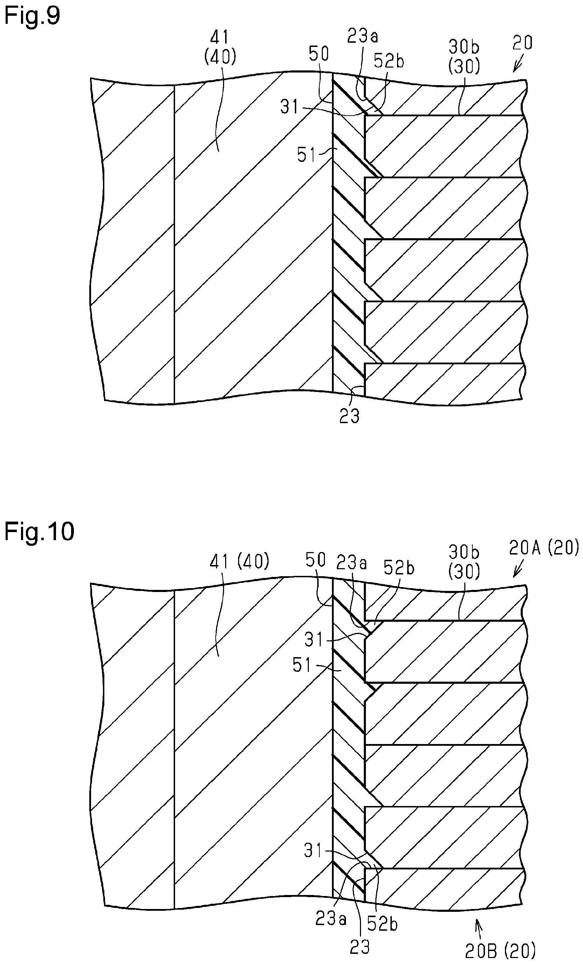

As shown in Fig. 9, the inner surface of each slot 23 may include recesses 23a recessed toward the opposite side of the coil 40. Each recess 23a may be formed by two iron core pieces 30 that are in contact with each other in the stacking direction. Each inner protrusion 52b is located in the corresponding recess 23a. Each recess 23a of the modification is formed by arranging a notch 31 in the corresponding iron core piece 30. For example, each notch 31 is formed by chamfering, over the entire circumference of the slot 23, the edge of the corresponding iron core piece 30 defining the inner surface of the slot 23. In such a structure, each inner protrusion 52b is located in the corresponding recess 23a. This allows the iron core pieces 30 to be easily clamped and held by the inner protrusions 52b, with the iron core pieces 30 in contact with each other in the stacking direction. Accordingly, the shape of the stator core 20 is maintained in a favorable manner.

In the modification of Fig. 9, the stator core 20 may be formed by stacking iron core pieces 30 in which the notches 31 are stacked in different orientations in the stacking direction. For example, as shown in Fig. 10, the stator core 20 may be formed by stacking a first stack 20A and a second stack 20B. The first stack 20A is a stack of iron core pieces 30 in which the notches 31 are oriented toward one side in the stacking direction. The second stack 20B is a stack of iron core pieces 30 in which the notches 31 are oriented toward the other side in the stacking direction. In this case, the first stack 20A and the second stack 20B are easily pressed by the inner protrusions 52b such that the first stack 20A and the second stack 20B approach each other in the stacking direction. This maintains the shape of the stator core 20.

The recesses 23a in the above-described modifications may be formed through the contact of, in the stacking direction, two iron core pieces 30 of which the edges defining the inner surface of the slot 23 each have a different shape. In this case, the edge of one of the iron core pieces 30 is located on the outer circumferential side of the other iron core piece 30. Thus, the edges of the two iron core pieces 30 form a step in the inner surface of the slot 23. The step forms the recess 23a. This structure also allows the iron core pieces 30 to be easily clamped and held by the inner protrusions 52b, with the iron core pieces 30 in contact with each other in the stacking direction. Accordingly, the shape of the stator core 20 is maintained in a favorable manner.

Each gap G may be provided at only a portion proximate to the inner protrusions 52b. That is, two iron core pieces 30 may be in contact with each other at a position away from the inner protrusions 52b.

The insulating sheet 50 does not have to include the inner protrusions 52b. That is, the insulating sheet 50 may include only the outer protrusions 52a.

The insulating sheet 50 does not have to include the outer protrusions 52a. That is, the insulating sheet 50 may include only the inner protrusions 52b.

Two adjacent ones of the inner protrusions 52b in the stacking direction may clamp and hold multiple iron core pieces 30b. That is, the number and positions of the inner protrusions 52b in the stator core 20 may be changed.

Each iron core piece 30 may include recesses and projections so that the iron core pieces 30 are joined to each other by swaging the iron core pieces 30 at their recesses and respective projections. In this case, the shape of the stator core 20 is maintained through the swaging at the recesses and respective projections and through the use of the protrusions 52.

The protrusions 52 may be arranged at part of the slot 23 in the circumferential direction or may be arranged in a non-continuous manner in the circumferential direction.

In the present embodiment, the stator of the rotating electric machine is described as an example of the armature. Instead, the structure of the stator may be used for the rotor of the rotating electric machine. In the present embodiment, the method for manufacturing the stator of the rotating electric machine is described as an example of the method for manufacturing the armature. Instead, the method for manufacturing the stator may be used for the method for manufacturing the rotor of the rotating electric machine.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

An armature includes an iron core (20). The iron core (20) includes stacked iron core pieces (30) and includes slots (23). The iron core pieces (30) are each plate-shaped. The armature includes a coil (40) arranged in each of the slots (23) and an insulating sheet (50) arranged between an inner surface of each of the slots (23) and an outer surface of the coil (40). The insulating sheet (50) includes a body (51) that covers the inner surface of the slot (23). The insulating sheet (50) includes protrusions (52) that protrude from the body (51) toward an opposite side of the coil (40) and are spaced apart from each other in a stacking direction of the iron core (20). The protrusions (52) clamp and hold one or more of the iron core pieces (30) in the stacking direction.

## Claims

1. An armature, comprising:
an iron core (20) that includes stacked iron core pieces (30) and includes slots (23), the iron core pieces (30) each being plate-shaped;
a coil (40) arranged in each of the slots (23); and
an insulating sheet (50) arranged between an inner surface of each of the slots (23) and an outer surface of the coil (40), the insulating sheet (50) including a body (51) that covers the inner surface of the slot (23) and protrusions (52) that protrude from the body (51) toward an opposite side of the coil (40) and are spaced apart from each other in a stacking direction of the iron core (20), wherein
the protrusions (52) clamp and hold one or more of the iron core pieces (30) in the stacking direction.

2. The armature according to claim 1, wherein the protrusions (52) include two outer protrusions (52a) that clamp and hold an entirety of the iron core (20) from opposite sides of the iron core (20) in the stacking direction.

3. The armature according to claim 1 or 2, wherein the protrusions (52) include inner protrusions (52b) each located between adjacent ones of the iron core pieces (30) in the stacking direction to clamp and hold the one or more of the iron core pieces (30).

4. The armature according to claim 3, wherein a gap (G) is provided between two of the iron core pieces (30) that hold each of the inner protrusions (52b) and are located on opposite sides of the inner protrusion (52b) in the stacking direction.

5. The armature according to claim 3, wherein
adjacent ones of the iron core pieces (30) in the stacking direction are in contact with each other in the stacking direction,
the inner surface of each of the slots (23) includes a recess (23a) that is formed by two adjacent ones of the iron core pieces (30) in the stacking direction, the recess (23a) being recessed toward the opposite side of the coil (40), and
each of the inner protrusions (52b) is located in a corresponding one of the recesses (23a).

6. A method for manufacturing an armature, the armature including an iron core (20) that includes stacked iron core pieces (30) and includes slots (23), the iron core pieces (30) each being plate-shaped, a coil (40) arranged in each of the slots (23), and an insulating sheet (50) arranged between an inner surface of each of the slots (23) and an outer surface of the coil (40), the method comprising:
an insulating sheet arranging step that arranges the insulating sheet (50) in each of the slots (23);
a coil arranging step that arranges the coil (40) in the slot (23) where the insulating sheet (50) is arranged; and
a pressing step that presses the coil (40) arranged in the slot (23) toward the inner surface of the slot (23) to plastically deform the coil (40) along the inner surface of the slot (23) and form protrusions (52), the protrusions (52) protruding from the insulating sheet (50) toward an opposite side of the coil (40), and the protrusions (52) clamping and holding one or more of the iron core pieces (30) in a stacking direction of the iron core (20).
